# EUROPEAN PATENT SPECIFICATION

(11) **EP 4 236 726 B1**
(45) Date of publication and mention of the grant of the patent: **08.01.2025**
(21) Application number: 21815661.0
(22) Date of filing: 02.11.2021
(51) Int. Cl.: A47B 96/06

(54) **SHELF SYSTEM COMPRISING A MARBLE SHELF**
REGALSYSTEM MIT EINEM MARMORREGAL
SYSTÈME D'ÉTAGÈRE COMPRENANT UNE ÉTAGÈRE EN MARBRE

(30) Priority: 02.11.2020 IT 202000026095
(43) Date of publication of application: 06.09.2023
(73) Proprietor: Bauce Bruno & C. S.r.l., 37010 Cavaion Veronese (VR) (IT)
(72) Inventor: BAUCE, Alessandro, 37010 Cavaion Veronese (VR) (IT); BAUCE, Davide, 37010 Cavaion Veronese (VR) (IT)
(74) Representative: Fisauli, Beatrice A. M.
(86) International application number: PCT/IB2021/060123
(87) International publication number: WO 2022/091066

(56) References cited:
- CA-A1- 2 328 650
- KR-A- 20170 022 196
- US-A- 3 752 088

## Description

The present invention refers, in general, to a shelf system with a marble shelf. More particularly, it relates to a shelf system comprising a marble shelf and an associated support system.

As is well known, various support systems are used for the application of shelves to a wall, of which the most commonly used is one or more exposed brackets. **Some samples of those support systems are disclosed by the patent documents** KR 2017 0022196 A**,** CA 2 328 650 A1 **and** US 3 752 088**.**

If the shelf is made of marble or stone, the use of visible brackets is avoided in order to achieve the optimum aesthetic result, which is the prerogative of using marble.

To this end, in order to fix a marble shelf to a wall, it is usually necessary to carry out the fixing during the construction of the wall itself, inserting the shelf between the bricks.

Alternatively, it is necessary to carve out a seat in the wall in which to insert the shelf and secure it with the use of adhesives. The wall must in any case be finished, particularly in the part of the visible hole not occupied by the shelf, but from which the adhesive is visible.

In other words, in order to fix a marble shelf to a wall, it is necessary either to carry out the work when building the wall, or to intervene heavily in the wall that has already been built, then having to carry out at least some finishing operations.

In both cases, specialised personnel are required, which is costly and time-consuming.

The purpose and function of the present invention is to provide a shelf system with a marble shelf, which overcomes the problems of the known technique.

A further scope of the invention is to provide a corbel system which enables a marble corbel to be fixed to a wall in a simple and fast manner.

A further scope of the present invention is to provide a corbel system that allows a marble corbel to be attached to a wall without the need for heavy work on the wall, thus avoiding the intervention of skilled personnel.

A further scope of the invention is to provide a shelf system that allows a marble shelf to be fixed to a wall without the use of visible supports, guaranteeing a high aesthetic effect.

These and other purposes are achieved by a shelf system comprising a marble shelf and a support system for fixing the marble shelf with at least one of its faces in contact with at least one wall.

In particular, in the at least one face of the marble shelf abutting the wall, at least one groove is obtained and the support system comprises a profile with at least one fixing means in the form of projections for fixing the profile to the wall, the groove being of a shape homologous to the profile, so that, once the profile is fixed to the wall, the shelf is coupled to the profile by means of an adhesive.

Thanks to the configuration of the shelf system, the assembly of a marble shelf to a wall is practical and fast, as it is sufficient to make one or more holes in a wall, through which one or more profiles are fixed to which, in turn, the marble shelf will be fixed.

The support system comprises a metal sheet including the profile and at least two protrusions.

It is therefore easy to obtain the support system from a common metal sheet, thus reducing the cost and complexity of the entire shelf system.

The support system is made in one piece, so that unwanted edges or steps are avoided.

Furthermore, the profile can be rectangular, so that it fits comfortably into the groove in the marble shelf.

Advantageously, the profile and the two or more protrusions can all be arranged on the same plane, so that the entire support system consists of just the metal sheet with a well-defined perimeter profile.

In addition, the two or more projections may be arranged in line with, or slightly within, the two ends of the rectangular profile.

Advantageously, the perimeter profile of the support system i.e. the metal sheet can be made by one or more of the following processes: blanking, stamping, laser cutting, water cutting.

Further features and details of the invention may be better understood from the following description, which is given by way of non-limiting example, as well as from the accompanying drawing board in which:
fig. 1 is a perspective view of a shelf system according to the invention fixed to a wall;
fig. 2 is an exploded perspective view of the bracket system according to the invention of fig. 1, comprising a marble bracket and a first support system;
fig. 3 is a perspective view of the marble shelf of figure 2, seen from the opposite side;
figs. 4, 5 are perspective views of a second support system and a third support system, useful for respective shelf systems according to variants of the invention;
Fig. 6 is an exploded perspective view of a bracket system according to a variant of the invention, comprising a marble bracket and a fourth support system;
Fig. 7 is a perspective view of the marble shelf of Fig. 6, viewed from the opposite side;
Figs. 8, 9 and 10 are perspective views of, respectively, a fifth, a sixth and a seventh support system, useful for respective corbel systems according to variants of the invention.

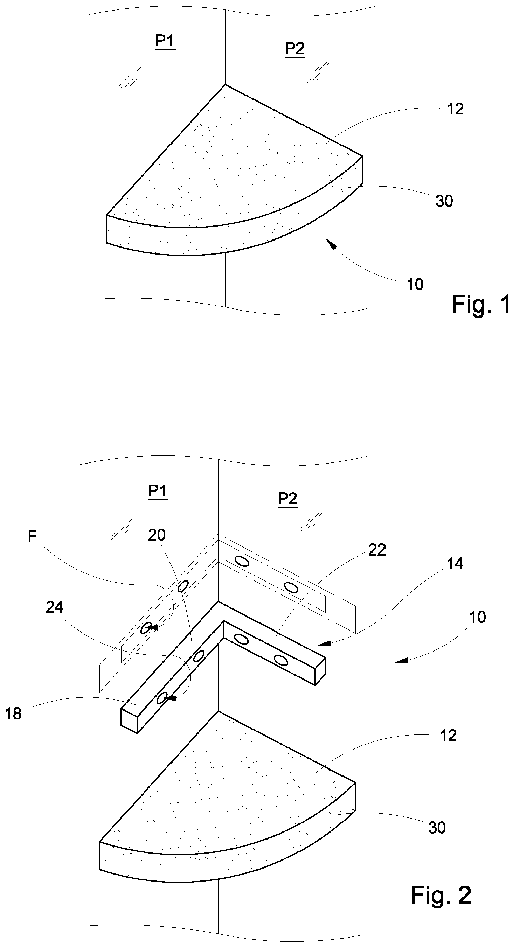

With reference to figures 1, 2, 3, 10 indicates a shelf system comprising a marble shelf 12 and a first support system 14, a system suitable for being fixed to the corner formed by a first wall P1 and a second wall P2 which are orthogonal to each other.

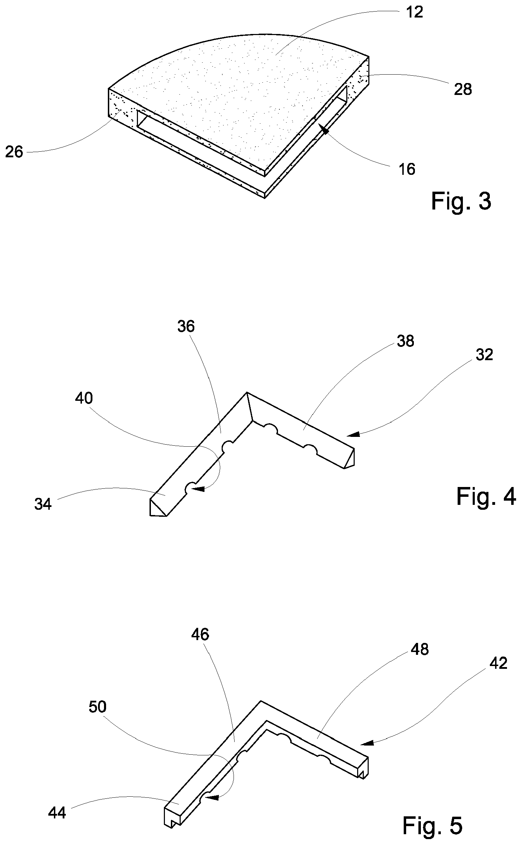

The marble shelf 12 has a quarter-circle shape and, as shown in figure 3, a groove 16 is cut into it.

The support system 14 comprises a corner profile 18, i.e. "L" shaped, formed by a first portion 20 and a second portion 22 orthogonal to each other and having a rectangular cross section.

Four holes 24 are cut in the corner profile 18, of which, for ease of reading, only one is indicated in figure 2. Precisely, two holes are cut in the first portion 20 of the corner profile 18 and two holes in the second portion 22 of the corner profile 18.

The groove 16 has a form homologous to the corner profile 18 and therefore develops on the two faces 26, 28 of the marble shelf 12 which are in contact with the walls P1 and P2.

Furthermore, the groove 16 only develops on the two faces 26, 28, without affecting the visible outer edge 30 of the marble shelf 12.

In order to assemble the shelf structure 10, object of the invention, first of all four holes F are drilled in the walls P1 and P2 (for ease of reading only one hole is indicated in figure 2), precisely two in the first wall P1 and two in the second wall P2, in the same position and corresponding to the holes 24 drilled in the corner profile 18.

The next step is to fasten the support system 14 to the walls. This involves fastening the angle profile 18 to the walls P1 and P2 using pressure screws or other equivalent fastening methods, if necessary by inserting suitable plugs in the holes F in the walls P1 and P2.

Once the support system 14 has been fixed to the walls P1 and P2, the marble shelf 12 is coupled to the corner profile 18 using adhesive substances such as silicone.

The shelf system 10 according to the invention, thus fixed to the walls P1 and P2, presents only the marble shelf 12 in view, while the corresponding support system 14 is hidden between the same marble shelf 12 and the walls P1 and P2.

The aesthetics of the shelf system 10 is optimal and the fixing of the support system 14 to the walls P1 and P2 is simple and does not require the intervention of specialised personnel.

According to a first variant of the invention, a shelf system analogous to the previously illustrated shelf system 10 may comprise a marble shelf and a second support system 32, illustrated in figure 4.

The second support system 32 comprises a corner profile 34, formed by a first portion 36 and a second portion 38 orthogonal to each other and having a triangular-shaped cross-section.

In the corner profile 34, four holes 40 are obtained, of which, for ease of reading, only one is indicated in figure 4. Precisely, two holes are obtained in the first portion 36 of the corner profile 34 and two holes in the second portion 38 of the corner profile 34.

The marble shelf to be coupled to the second support system 32 has a groove of a shape homologous to the corner profile 34.

According to a second variant of the invention, a shelf system analogous to the previously illustrated shelf system 10 may comprise a marble shelf and a second support system 42, illustrated in figure 5.

The second support system 42 comprises a corner profile 44, formed by a first portion 46 and a second portion 48 orthogonal to each other and having an inverted "L" shaped cross-section.

Four holes 50 are obtained in the corner profile 44, of which, for ease of reading, only one is indicated in figure 5. Precisely, two holes are obtained in the first portion 46 of the corner profile 44 and two holes in the second portion 48 of the corner profile 44.

The marble shelf to be coupled to the second support system 42 has a groove of homologous shape to the corner profile 44.

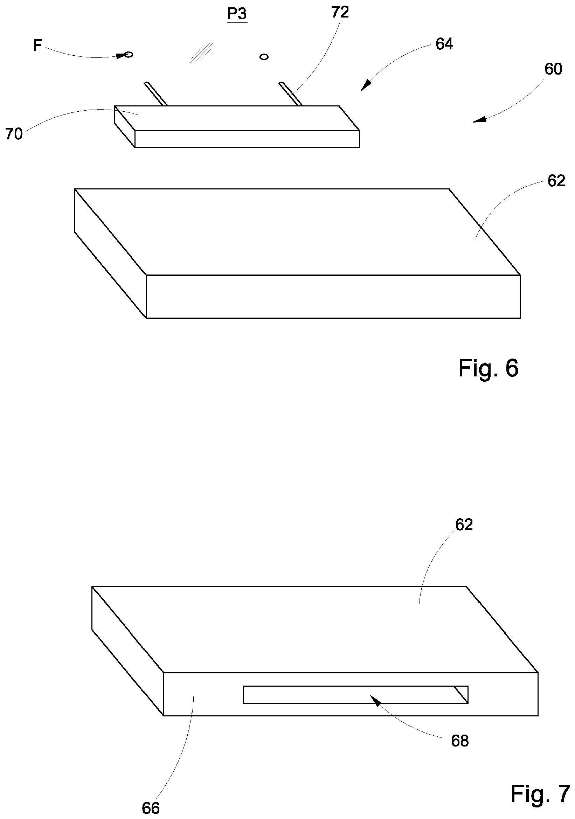

According to a third variant of the invention, illustrated in Figures 6 and 7, a shelf system 60 comprises a marble shelf 62 and a third support system 64, and is suitable for attachment to a third wall P3.

The marble shelf 62 has a parallelepiped shape, includes a face 66 suitable to go against the third wall P3 and in which a groove 68 is obtained.

The third support system 64 comprises a linear profile 70 to which two pins 72 are fixed.

The bracket system 60 envisages firstly the creation of two holes F in the wall P3 arranged at a distance equal to that between the two pins 72.

Once the dowels have been inserted in the holes F in the wall P3, the dowels 72 are inserted in the same holes F and the linear profile 70 is fixed to the wall P3.

Then the marble shelf 62 is coupled to the linear profile 70 using adhesives such as silicone.

Also in this case, the shelf system 60 according to a variant of the invention, does not have any visible support systems, with consequent advantages from an aesthetic point of view.

Also from a technical point of view, the coupling of the marble shelf 62 to the wall P3 is even simpler, without the need for the intervention of specialised personnel.

According to further variants of the invention, the shelf system 60 comprises the marble shelf 62 and, alternatively to the third support system 64, has a fourth support system 74 or a fifth support system 84 or a sixth support system 94.

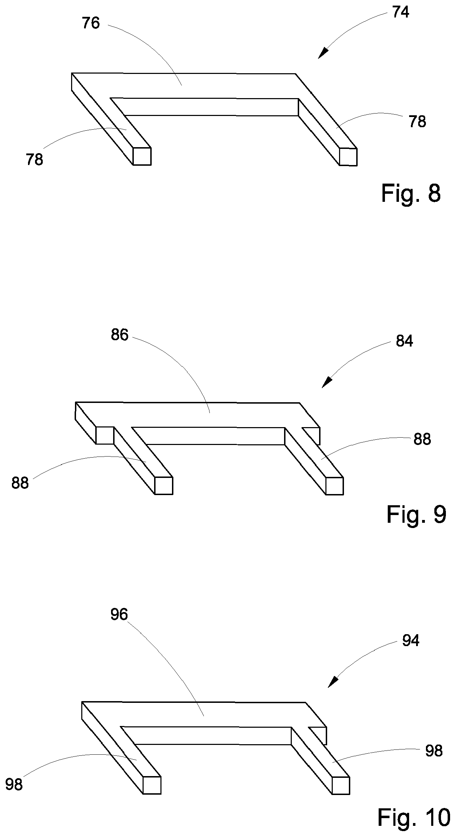

The fourth support system 74, made in a single body by shearing or stamping a metal sheet, comprises a rectangular profile 76 from which two protrusions 78 project, as visible in figure 8.

In particular, the two protrusions 78 are arranged at the ends of the rectangular profile 76.

The fifth support system 84, made in a single body by shearing, stamping, laser cutting or water cutting a metal sheet, comprises a rectangular profile 86 from which two protrusions 88 protrude, as visible in figure 9.

In particular, the two protrusions 88 are arranged slightly inside the ends of the rectangular profile 86.

The sixth support system 94, made in a single body by shearing, stamping, laser cutting or water cutting a metal sheet, comprises a rectangular profile 96 from which two protrusions 98 protrude, as visible in figure 10.

In particular, one of the two protrusions 98 is disposed slightly inside one of the two ends of the rectangular profile 96, while the other is in line with the other end of the rectangular profile 96.

As illustrated in Figures 8, 9 and 10, in the fourth support system 74, in the fifth support system 84 and in the sixth support system 94 the respective profile 76, 86, 96 and the corresponding two protrusions 78, 88, 98 are all arranged in the same plane.

Furthermore, the fourth support system 74 or the fifth support system 84 or the sixth support system 94 may also be used to fix a marble shelf in the shape of a quarter moon, to two walls at right angles to each other.

In this case, two grooves are obtained in the marble shelf, in particular on the two faces which will be abutting the two walls, one on each face.

The two grooves are not continuous like the groove 16 illustrated for the shelf system 10 of figures 1, 2, 3.

However, even in the case of a marble shelf in the shape of a quarter moon in which there is a continuous groove 16 in the two faces, as in figure 3, it is possible to use the fourth support system 74 or the fifth support system 84 or the sixth support system 94, fixing a rectangular profile to each of the two faces which make a rebate on each wall to which the shelf is to be fixed.

Further variations are possible for example, the shape of the elements used as the support system may vary, depending also on the application purposes of the bracket system itself.

## Claims

1. Bracket system (60) comprising a marble bracket (62) and a support system (74; 84; 94) suitable for fixing the marble bracket (62) with at least one face thereof to the at least one wall, wherein in the at least one face of the marble bracket (62) which goes into the wall, at least one groove is obtained and wherein the support system (74; 84; 94) comprises a profile (76; 86; 96) with at least one fixing means in the form of projections (78; 88; 98) suitable for fixing the profile to the wall, the groove being of a form homologous to the profile, so that, once the profile is fixed to the wall, the shelf is coupled to the profile by means of an adhesive, wherein the support system (74; 84; 94) comprises a metal sheet including the profile (76; 86; 96) and at least two projections (78; 88; 98); **characterized in that** the support system (74; 84; 94) is made as a single body.

2. Bracket system (60) according to the preceding claim, wherein the profile (76; 86; 96) is rectangular.

3. Bracket system (60) according to one of the preceding claims, wherein the profile (76; 86; 96) and the at least two projections (78; 88; 98) are all arranged in the same plane.

4. Bracket system (60) according to one of the preceding claims, wherein two protrusions (78) are arranged at respective ends of the rectangular profile (76).

5. Bracket system (60) according to one of the claims 1 to 3, wherein two protrusions (88) are arranged slightly inside the respective ends of the rectangular profile (76).

6. Bracket system (60) according to one of the claims 1 to 3, wherein a protrusion (98) is disposed slightly inside one of the ends of the rectangular profile (96), while another protrusion (98) is in line with the opposite end of the rectangular profile (96).

7. Bracket system (60) according to any one of the preceding claims, wherein the metal sheet comprises a perimeter edge defining the profile (78; 88; 98) and the at least two protrusions (78; 88; 98), said perimeter edge being obtained by one or more of the following processes: blanking, stamping, laser cutting, water cutting.

## Patentansprüche

1. Konsolensystem (60), das eine Marmorkonsole (62) und ein Trägersystem (74; 84; 94) umfasst, das geeignet ist, die Marmorkonsole (62) mit mindestens einer ihrer Flächen an der mindestens einen Wand zu befestigen, wobei in der mindestens einen Fläche der Marmorkonsole (62), die in die Wand eindringt, mindestens eine Nut erhalten wird und wobei das Trägersystem (74; 84; 94) ein Profil (76; 86; 96) mit mindestens einem Befestigungsmittel in Form von Vorsprüngen (78; 88; 98) aufweist, die geeignet sind, das Profil an der Wand zu befestigen, wobei die Nut eine zum Profil homologe Form aufweist, so dass, sobald das Profil an der Wand befestigt ist, das Regal mittels eines Klebstoffs mit dem Profil verbunden ist, wobei das Trägersystem (74; 84; 94) ein Metallblech aufweist, das das Profil (76; 86; 96) und mindestens zwei Vorsprünge (78; 88; 98) umfasst; **dadurch gekennzeichnet, dass** das Trägersystem (74; 84; 94) als ein einziger Körper ausgeführt ist.

2. Trägersystem (60) nach dem vorhergehenden Anspruch, wobei das Profil (76; 86; 96) rechteckig ist.

3. Konsolensystem (60) nach einem der vorhergehenden Ansprüche, wobei das Profil (76; 86; 96) und die mindestens zwei Vorsprünge (78; 88; 98) alle in der gleichen Ebene angeordnet sind.

4. Konsolensystem (60) nach einem der vorangehenden Ansprüche, wobei zwei Vorsprünge (78) an den jeweiligen Enden des rechteckigen Profils (76) angeordnet sind.

5. Konsolensystem (60) nach einem der Ansprüche 1 bis 3, wobei zwei Vorsprünge (88) etwas innerhalb der jeweiligen Enden des Rechteckprofils (76) angeordnet sind.

6. Klammersystem (60) nach einem der Ansprüche 1 bis 3, wobei ein Vorsprung (98) leicht innerhalb eines der Enden des rechteckigen Profils (96) angeordnet ist, während ein anderer Vorsprung (98) mit dem gegenüberliegenden Ende des rechteckigen Profils (96) fluchtet.

7. Klammersystem (60) nach einem der vorhergehenden Ansprüche, wobei das Metallblech eine Umfangskante aufweist, die das Profil (78; 88; 98) und die mindestens zwei Vorsprünge (78; 88; 98) definiert, wobei die Umfangskante durch eines oder mehrere der folgenden Verfahren erhalten wird: Stanzen, Prägen, Laserschneiden, Wasserschneiden.

## Revendications

1. Système de support (60) comprenant un support en marbre (62) et un système de support (74 ; 84 ; 94) apte à fixer le support en marbre (62) avec au moins une de ses faces au moins un mur, dans lequel dans la au moins une face du support en marbre (62) qui entre dans le mur, au moins une rainure est obtenue et dans lequel le système de support (74 ; 84 ; 94) comprend un profil (76 ; 86 ; 96) avec au moins un moyen de fixation sous la forme de saillies (78 ; 88 ; 98) aptes à fixer le profil au mur, la rainure étant de forme homologue au profil, de sorte qu'une fois le profil fixé au mur, la tablette est couplée au profil au moyen d'un adhésif, dans lequel le système de support (74 ; 84 ; 94) comprend une tôle métallique incluant le profil (76 ; 86 ; 96) et au moins deux saillies (78 ; 88 ; 98) ; **caractérisé par le fait que**
le système de support (74 ; 84 ; 94) est constitué d'un seul corps.

2. Système de support (60) selon la revendication précédente, dans lequel le profil (76 ; 86 ; 96) est rectangulaire.

3. Système de support (60) selon l'une des revendications précédentes, dans lequel le profil (76 ; 86 ; 96) et les au moins deux saillies (78 ; 88 ; 98) sont tous disposés dans le même plan.

4. Système de support (60) selon l'une des revendications précédentes, dans lequel deux saillies (78) sont disposées aux extrémités respectives du profil rectangulaire (76).

5. Système de support (60) selon l'une des revendications 1 à 3, dans lequel deux protubérances (88) sont disposées légèrement à l'intérieur des extrémités respectives du profil rectangulaire (76).

6. Système de support (60) selon l'une des revendications 1 à 3, dans lequel une protubérance (98) est disposée légèrement à l'intérieur de l'une des extrémités du profil rectangulaire (96), tandis qu'une autre protubérance (98) est alignée avec l'extrémité opposée du profil rectangulaire (96).

7. Système de support (60) selon l'une quelconque des revendications précédentes, dans lequel la tôle métallique comprend un bord périphérique définissant le profil (78 ; 88 ; 98) et les au moins deux protubérances (78 ; 88 ; 98), ledit bord périphérique étant obtenu par un ou plusieurs des procédés suivants : découpage, emboutissage, découpe au laser, découpe à l'eau.
